(19) Europäisches Patentamt / European Patent Office / Office européen des brevets

(11) **EP 3 208 138 B1**

(12) **EUROPEAN PATENT SPECIFICATION**

(45) Date of publication and mention
of the grant of the patent:
**12.10.2022 Bulletin 2022/41**

(21) Application number: **16305180.8**

(22) Date of filing: **17.02.2016**

(51) International Patent Classification (IPC):
**B60L 15/20** (2006.01)      **H02P 21/06** (2016.01)
**H02P 23/08** (2006.01)      **H02P 21/20** (2016.01)

(52) Cooperative Patent Classification (CPC):
**H02P 21/20; B60L 15/2009; H02P 21/06;**
**H02P 23/08;** B60L 2200/26; Y02T 10/64;
Y02T 10/72

(54) **METHOD FOR ESTIMATING A TORQUE OF AN ASYNCHRONOUS ELECTRIC MACHINE, A TORQUE CONTROLLER AND AN ELECTRIC VEHICLE**

VERFAHREN ZUR SCHÄTZUNG EINES DREHMOMENTS EINER ASYNCHRONEN ELEKTRISCHEN MASCHINE, EINE DREHMOMENTSTEUERUNG UND EIN ELEKTROFAHRZEUG

PROCÉDÉ POUR ESTIMER LE COUPLE D'UNE MACHINE ÉLECTRIQUE ASYNCHRONE, UNITÉ DE COMMANDE DE COUPLE ET VÉHICULE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2017 Bulletin 2017/34**

(73) Proprietor: **ALSTOM Transport Technologies
93400 Saint-Ouen (FR)**

(72) Inventors:
• **DOLCINI, Andrea
20026 NOVATE MILANESE (IT)**
• **MOIA, Piero
20060 Truccazzano (IT)**

(74) Representative: **Lavoix
2, place d'Estienne d'Orves
75441 Paris Cedex 09 (FR)**

(56) References cited:
**EP-A1- 0 817 359**       **EP-A1- 1 322 032**
**WO-A1-2013/061808**       **US-A1- 2012 200 243**
**US-A1- 2015 149 005**       **US-A1- 2015 229 247**

• **WINDISCH THOMAS ET AL: "Loss minimizing and saturation dependent control of induction machines in vehicle applications", IECON 2015 - 41ST ANNUAL CONFERENCE OF THE IEEE INDUSTRIAL ELECTRONICS SOCIETY, IEEE, 9 November 2015 (2015-11-09), pages 1530-1535, XP032855474, DOI: 10.1109/IECON.2015.7392318 [retrieved on 2016-01-25]**
• **KUTIJA MARTINA ET AL: "Magnetization of speed sensorless squirrel-cage induction generator for wind power application using a phase-locked loop", ELECTRIC POWER SYSTEMS RESEARCH, vol. 122, 1 May 2015 (2015-05-01), pages 119-129, XP055817748, AMSTERDAM, NL ISSN: 0378-7796, DOI: 10.1016/j.epsr.2015.01.009**

**Description**

The present invention concerns a method for estimating a torque of an asynchronous electric machine of an electric vehicle, in particular a railway vehicle.

Further, the present invention relates to a controller for an electric vehicle, in particular a railway vehicle.

Additionally, the present invention relates to an electric vehicle, in particular a railway vehicle.

EP 1 322 032 A1 relates to the torque estimation of an asynchronous machine.

The article of WINDISCH THOMAS ET AL, IECON 2015 - 41ST ANNUAL CONFERENCE OF THE IEEE INDUSTRIAL ELECTRONICS SOCIETY, IEEE, (20151109), doi:10.1109/IECON.2015.7392318, pages 1530 - 1535: "Loss minimizing and saturation dependent control of induction machines in vehicle applications" relates to the torque estimation of a squirrel cage induction machine.

WO 2013/061808 A1 also relates to the estimation of a torque of an induction motor.

Electric vehicles, in particular railway vehicles, require a redundant torque estimation. For example, for safety issues it is required to monitor the electrical braking torque of a railway vehicle in order to activate the mechanical, friction brakes if the electrical braking supplied by the traction machine is lower than defined by the reference command. Usually, safety functions must be independent from a control system.

The document KUTIJA MARTINA et AL "Magnetization of speed sensor-less squirrel-cage induction generator for wind power application using a phase-locked loop", ELECTRIC POWER SYSTEMS RESEARCH, vol. 122, 1 May 2015 (2015-05-01), pages 119, 129, discloses a PLL-based rotor flux position controller and improves the accuracy of the rotor flux angle.

Typically, the redundant torque estimation is performed by measuring motor currents and speed and calculating the torque by a look-up table, in which the torque values are stored in correspondence of current and speed pairs. Whenever there is a mismatch of more than 30% between the calculated torque and the commanded torque, the controller issues a torque check failure and activates the friction brakes. In some embodiments, the look-up table is only used for speeds greater than 16 km per hour.

However, there is not a bijective correspondence between current, speed values and torque. For example, different torque values are possibly depending on the motor flux and on motor parameter values, which are changing with temperature and saturation, so that a look-up table approach may give a wrong torque estimation.

Object of the invention is to provide a method which overcomes the drawbacks of the look-up table and enables an efficient and accurate estimation of the torque.

In light of the above, a method for estimating a torque of an asynchronous electric machine of an electric vehicle according to claim 1 is provided.

The dependent claims set out particular embodiments of the invention.

According to a further aspect, a method for controlling an electric vehicle, in particular a railway vehicle, is provided comprising: receiving a torque command; estimating the torque according to the method according to an embodiment disclosed herein for determining an estimated torque; comparing the sign of the estimated torque with the sign of the torque command and activating friction brakes if, in braking, the signs are different for more than 1 second, and/or activating friction brakes of the electrical vehicle if the difference between the absolute value of the torque command and the absolute value of estimated torque is greater than a predefined percentage, for example greater than 30 percent.

According to a further aspect, a torque controller for an electric vehicle, in particular a railway vehicle, is provided according to claim 6.

Further embodiments may include one or more of the following features in every technically feasible combination:

the controller is further adapted to transform the first phase current and the second phase current to a direct current and a quadrature current of a rotating coordinate system rotating with the electrical slip pulsation of the electrical machine based on the first phase current and the second phase current and the rotor speed;
the controller is further adapted to: determine the sign of the torque of the asynchronous electric machine based on the sign of the electrical slip pulsation of the asynchronous electric machine; calculate the estimated torque of the asynchronous electric machine further based on the determined sign of the torque; and/or
wherein Lm is a constant value correspondent to the value of the inductance at the nominal flux of the asynchronous electric machine.

According to another aspect, an electric vehicle is provided comprising: at least one asynchronous electric machine, and a torque controller according to an embodiment disclosed herein. So that the manner in which the above recited features of the present invention can be understood in detail, a more particular description of the invention, briefly summarized above, may be read by reference to embodiments. The accompanying drawings relate to embodiments of the invention and are described in the following:

Fig. 1 shows schematically a railway vehicle according to an embodiment of the invention;
Fig. 2 shows schematically a flow chart for estimating a torque of the electrical machine;
Fig. 3 shows schematically a flow chart of a method according to an embodiment of the invention, and
Fig. 4 shows a graph with curves of the stator frequency and the estimated torque.

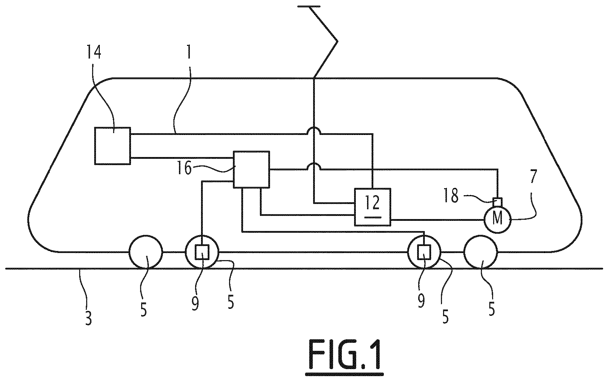

Figure 1 shows schematically a railway vehicle 1 according to an embodiment of the invention. For example, the railway vehicle 1 may be a tramway, a high speed train a locomotive etc. According to embodiments, the invention may be realized also with other electric vehicles.

The railway vehicle 1 drives along a track 3 using a plurality of wheels 5. The railway vehicle 1 includes at least one electric machine 7 for driving the wheels 5. The at least one electric machine 7 may be used for accelerating the railway vehicle 1 and for decelerating the railway vehicle 1. The electric machine 7 is used as a traction machine or motor when accelerating the railway vehicle 1 and as a generator when decelerating the railway vehicle 1. According to an embodiment, the electric machine is an asynchronous machine, in particular a three phase asynchronous machine. The at least one electric machine 7 includes a rotor rotating with a rotor angular speed $\omega_m$ and has a number of pole pairs np.

Further, the railway vehicle 1 includes a plurality of friction brakes 9 acting on the wheels 5 or on an axle connected to the wheels. The friction brakes 9 are adapted to decelerate the wheels 5 when they are activated. For example, they are then generating heat due to friction.

The railway vehicle 1 includes a motor controller and inverter 12 for each electric machine 7, which generates the phase currents for the respective electric machine 7. Further, the motor controller 12 may include a measurement device for measuring at least two phase currents of different phases. The motor controller 12 is adapted to receive a torque command $T_{ref}$ from a main controller 14 and to adapt the phase currents of the at least one electric machine 7, such that it corresponds to the requested torque command.

In an embodiment, the motor controller 12 and/or the main controller 14 includes a primary torque estimator based on phase currents and phase voltages of the at least one electric machine.

Further, the main controller 14, which is adapted to generate the torque command $T_{ref}$ to be provided to the motor controller 12 and a redundant torque controller 16. The redundant torque controller 16 is adapted to receive at least the measurement values of two phase currents and the rotor angular speed $\omega_m$ of the electric machine 7 from a motor speed sensor 18. According to an embodiment, the redundant torque controller 16 is provided on a different hardware with respect to the main controller 14 and/or the motor controller 12. The redundant torque controller 16 is provided to provide a second estimation of the torque and to compare the second estimated torque with the requested torque $T_{ref}$. In braking operation, in case the difference between the estimated torque and the requested torque is higher than a predetermined level, the redundant torque controller is adapted to activate the friction brakes 9.

According to an embodiment, the railway vehicle 1 includes a speed sensor for measuring the speed of the railway vehicle on the track 2. The speed sensor may directly measure the speed or via the rotational speed of the wheels 5. The speed is provided to the main controller 14 and/or the redundant torque controller 16.

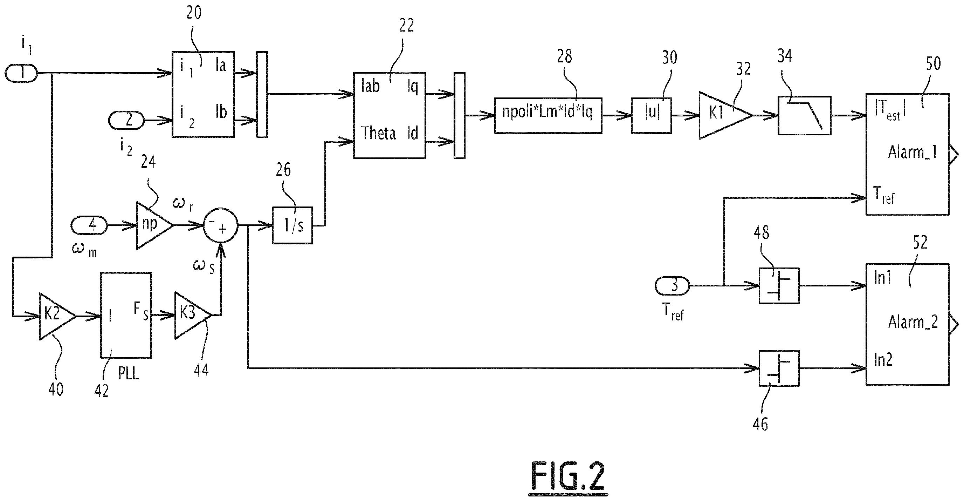

Figure 2 shows a flow chart for determining the estimated the torque of the at least one electric machine 7. In an embodiment, the redundant torque controller 16 executes several steps for estimating the torque.

According to the invention, the redundant torque controller 16 is adapted to estimate the torque of the electric machine based on two received machine currents, a first phase current i1 and a second phase current i2, and the received rotor angular speed $\omega_m$ of the electric machine 7. According to embodiments, only two of the three phase currents of the electric machine are needed. According to an embodiment, the redundant torque controller 16 realizes the torque estimation using an I-$\Omega$ estimator, in particular without a look-up table. In other words, the redundant torque controller comprises an I-$\Omega$ estimator. An I-$\Omega$ estimator is adapted to calculate the estimated torque $T_{est}$ based on at least two phase currents and the rotor angular speed.

Phase currents are transformed using a Park transformation in order to get a direct current Id and a quadrature current Iq components. In Figure 2, a first block 20 is shown, which transforms first phase current i1 and the second phase current i2 into two currents in a complex plane, namely a real portion current Ia and an imaginary part of the current Ib in a fixed coordinate system:

$$T = \cdot \begin{bmatrix} \sqrt{\dfrac{3}{2}} & 0 \\ \dfrac{1}{\sqrt{2}} & \sqrt{2} \end{bmatrix} \qquad \text{Equation (1)}$$

$$\begin{bmatrix} Ia \\ Ib \end{bmatrix} = T \cdot \begin{bmatrix} i1 \\ i2 \\ -i1-i2 \end{bmatrix} \qquad \text{Equation (2)}$$

The currents Ia and Ib are then transformed in block 22 into a direct current Id and a quadrature current Iq of a rotating coordinate system rotating with the speed of the rotor of the electrical machine:

$$R = \begin{bmatrix} \cos\theta & \sin\theta \\ -\sin\theta & \cos\theta \end{bmatrix} \qquad \text{Equation (3)}$$

$$\begin{bmatrix} Id \\ Iq \end{bmatrix} = R \cdot \begin{bmatrix} Ia \\ Ib \end{bmatrix} \qquad \text{Equation (4)}$$

The electrical rotational angle is determined using the following equation: $\theta = np\!\int(\omega_s - \omega_r)$. In other words $\theta$ is the (electrical) rotational angle of the slip pulsation of the electric machine. According to embodiments, as it can be seen from Figure 2, the rotor angular speed $\omega_m$ of the electric machine 7 is first multiplied by the number of pair poles np of the electric machine 7 in block 24. As a result the rotor pulsation $\omega_r$ is provided. The difference between the stator pulsation $\omega_s$ and the rotor pulsation $\omega_r$ is integrated in block 26 to provide the rotational angle $\theta$ to the block 22 for calculating the direct current Id and the quadrature current Iq.

The stator pulsation $\omega_s$ is calculated by blocks 40, 42, 44: block 40 represents a gain (K2) to adapt the measured input current i1 to the input signal for the phase locked loop (PLL) block 42 which calculates the fundamental stator frequency Fs of the electrical motor. In an embodiment the PLL is able to follow the stator frequency for Fs > 3 Hz. This corresponds in an embodiment to about 4 km/h of the speed of the railway vehicle. In other embodiments, depending on the gear ratio between the electric machine and the wheels diameter, the speed may be higher or lower.

The stator frequency Fs determined by the PLL in block 42 is converted in block 44 (K3=2$\pi$) to the pulsation $\omega_s$

As a next step, an estimated torque $T_{est}$ is calculated based on the following equation:

$$T_{est} \approx K1 \cdot np \cdot L_m \cdot I_d \cdot I_q \qquad \text{Equation (4)}$$

In equation 4, np represents the number of pole pairs, K1 is a factor to adjust the approximated formula, Lm is the nominal value of the electric machine magnetizing inductance, Id is the direct current and Iq is the quadrature current. Equation (4) represents a simplified I-$\Omega$ estimator.

In block 28 a first intermediate estimated torque is calculated using the formula Ti=np * Lm * Id * Iq, corresponding to the equation (4) without the adjustment constant K1. According to an embodiment, the used value for the electric machine magnetizing inductance Lm is constant (corresponding to the value of the magnetizing inductance at the nominal rotor flux). If a higher precision is needed, the value of the magnetizing inductance Lm could be determined as a function of the magnetizing current Id.

In block 30, the absolute value is determined from the intermediate estimated torque Ti, and in block 32, the absolute value is multiplied by the adjustment factor K1. Thus, an estimated absolute value of the torque is determined as output of block 32. In a typical embodiment, the adjustment factor K1 is 1. In such a case, block 32 may be also omitted and the equation (4) further simplified. In other embodiments, K1 could be chosen in order to fit better the real motor torque.

According to an embodiment, a low pass filter 34 is applied to the calculation result of the estimated absolute torque to reduce the ripple, as the phase currents are not exactly sinusoidal, in particular due to an inverter pulse width modulation PWM. In other embodiments, one or more low pass filters may be arranged between block 22 and block 28. In some embodiments, which may be combined with other embodiments disclosed herein, the low pass filter has a cutting frequency of about 1 Hz in order to follow the variations of the reference torque. Typically a low pass filter of the first order is adopted.

According to an embodiment, also the sign of the estimated absolute torque value has to be determined, in particular calculated. That can be simply performed evaluating the sign of the slip pulsation ($\omega_s - \omega_r$): in case the electric machine is motoring, the slip is positive, while in case the electric machine is braking, working as a generator, the slip is negative.

The sign of the slip pulsation is determined (block 46) and compared in block 52 with the sign of the torque command $T_{ref}$ determined in block 48.

When the electric machine should be in braking operation, the sign of the torque command $T_{ref}$ is negative. In this case, if the sign of the slip pulsation is positive for more than 1 second then the redundant torque controller 16 is adapted to activate the friction brakes (output Alarm 2.

Similarly in block 50 the absolute value of the estimated torque $T_{est}$ is compared with the absolute value of the torque command $T_{ref}$.

When the electric machine should be in braking operation, the sign of the torque command $T_{ref}$ is negative. In this case (i.e. when the electric machine is in braking operation), if the difference between the absolute value of the torque command $T_{ref}$ and the absolute value of the estimated torque $T_{est}$ is greater than a predefined percentage value, the redundant torque controller 16 is adapted to activate the friction brakes (output Alarm 1).

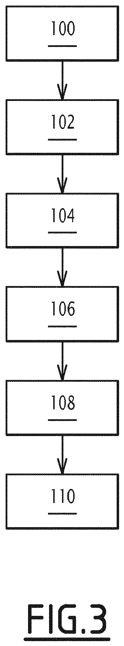

Figure 3 shows schematically a method according to an embodiment of the present invention.

In a first step 100, a measurement of a first phase current i1 and a second phase current i2 of the asynchronous electric machine 7 is received, for example from the motor controller 12.

In a second step 102, which may be also before or concurrently to step 100, the rotational speed $\omega_m$ of the asynchronous electric machine is received, for example from a speed sensor 18.

In step 104, from the measurement of the phase current i1, the PLL 42 determines the stator frequency Fs, from which the stator pulsation $\omega_s$ is then calculated. The difference between the stator pulsation and the rotor pulsation determines the electrical slip pulsation ($\omega_s$-$\omega_r$) which is integrated to evaluate the electrical rotational angle $\theta$ which is used for calculating the direct current Id and the quadrature current Iq.

In step 106, an estimated torque $T_{est}$ based on Id and Iq currents and on motor parameters (np and Lm) is calculated.

In step 108, the sign of the slip pulsation ($\omega_s$ - $\omega_r$) is compared with the sign of the torque command $T_{ref}$ : in braking operation, when the sign of the torque command is negative, if the sign of the slip pulsation is positive for more than 1 second then, the redundant torque controller 16 is adapted to activate the friction brakes.

In step 110, in braking operation, if the difference between the absolute value of the torque command $T_{ref}$ and the absolute value of the estimated torque $T_{est}$ is greater than a predefined percentage, for example greater than 30 percent, the friction brakes 9 are activated by the redundant torque controller.

In other words, according to the invention, it is possible to use a simplified I-$\Omega$ Observer to calculate in real time the electric machine torque, which is also reliable at high speed. In some embodiments, the precision of the estimation is more than 80%, even if for the electric machine magnetizing inductance Lm a constant value is used.

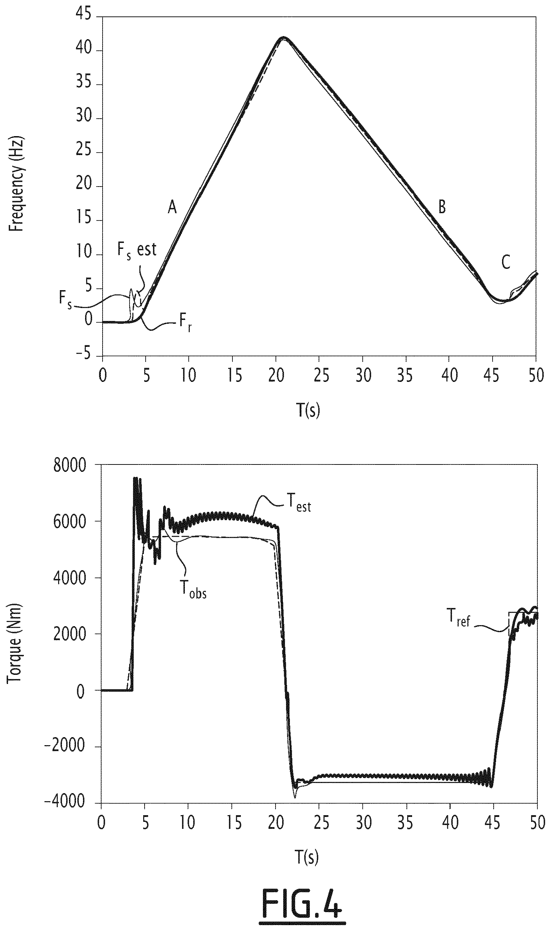

Figure 4 shows a graph simulating the different currents from standstill of the railway vehicle. The railway vehicle first accelerates in a first phase A and then decelerates in a second phase B and finally accelerates again in the phase C. In the upper graph the real stator frequency Fs, the rotor electrical frequency Fr and the stator frequency $Fs_{est}$, estimated by the PLL 42, are shown.

In the lower graph the torque reference $T_{ref}$ , the torque $T_{obs}$ evaluated by the motor control 12 and the torque $T_{est}$ estimated by the redundant torque estimator are shown.

As it can be seen, for frequency Fs > 3Hz, the estimated torque $T_{est}$ does not substantially deviate from the torque $T_{obs}$ evaluated by the motor control 12.

**Claims**

1.  Method for estimating a torque of an asynchronous electric machine (7) of an electric vehicle, in particular a railway vehicle (1), comprising:

    receiving at least a measurement of a first phase current (i1) and a second phase current (i2) of the asynchronous electric machine (7);
    receiving a rotor rotational speed ($\omega_m$) of the asynchronous electric machine (7); calculating an estimated torque based on the rotor rotational speed of the electric machine and the first and second phase current, the estimated torque is calculated based on the following equation: $T_{est}$ = K1 * np * Lm * Id * Iq, wherein np is the number of pole pairs of the asynchronous electric machine, Lm is the nominal value of an inductance of the asynchronous electric machine (7), and Id is a direct current and Iq is a quadrature current based on the first phase current (i1) and the second phase current (i2), and K1 is an optional adjustment factor, **characterized by** further comprising: estimating a stator frequency (Fs) of the stator of the electric machine (7) using a phase locked loop based on the first and/or the second phase current (i1, i2), wherein the first phase current (i1) and the second phase current (i2) is transformed to a direct current (Id) and a quadrature current (Iq) of a rotating coordinate system rotating with the electrical slip pulsation of the machine based on the first phase current, the second phase current and the rotor speed ($\omega_m$), wherein the electrical rotational angle is determined using the equation $\theta = np\int(\omega_s - \omega_r)$, with $\theta$ being the electrical rotational angle of the slip pulsation, $\omega r$ the rotor pulsation and $\omega_s$ the stator pulsation, wherein the rotor angular speed ($\omega_m$) of the electric machine (7) is multiplied by the number of pole pairs (np) to provide the rotor pulsation ($\omega_r$), wherein the stator frequency (Fs) determined by the phased lock loop is converted to the stator pulsation ($\omega_s$).

2. Method according to one of the preceding claims, wherein Lm is a constant value corresponding to the value of the inductance at the nominal flux of the asynchronous electric machine (7).

3. Method according to one of the preceding claims, wherein Lm is variable, according to the saturation curve of the asynchronous electric machine (7).

4. Method according to one of the preceding claims, wherein the method further comprises:

   determining the sign of the torque of the asynchronous electric machine (7) based on the sign of the electrical slip pulsation ( $\omega_s - \omega_r$);
   calculating the absolute value of the estimated torque of the asynchronous electric machine.

5. Method for controlling an electric vehicle, in particular a railway vehicle (1), comprising:

   receiving a torque command;
   estimating the torque according to the method according to one of the preceding claims for determining an estimated torque;
   comparing (108) the sign of the estimated torque ($T_{est}$) with the sign of the torque command ($T_{ref}$) and activating friction brakes if, in braking, the signs are different for more than 1 second, and/or
   activating friction brakes (110) of the electrical vehicle (1) if the difference between the absolute value of the torque command and the absolute value of estimated torque is greater than a predefined percentage, for example greater than 30 percent.

6. Torque controller (16) for an electric vehicle (1), in particular a railway vehicle, the electric vehicle comprises at least one asynchronous electric machine (7), wherein the controller is adapted to receive at least a measurement of a first phase current (i1) and a second phase current (i2) of the at least one asynchronous electric machine (7) and to receive a rotor rotational speed of the at least one asynchronous electric machine, the controller (16) further comprising an I-$\Omega$ Estimator (28, 30, 32) for calculating an estimated torque based on the electrical slip pulsation ($\omega_s - \omega_r$) of the asynchronous electric machine (7) and the first and second phase currents (i1, i2), the controller is further adapted to calculate the estimated torque based on the following equation: $T_{est} = K1 * np * Lm * Id * Iq$, wherein np is the number of pole pairs of the asynchronous electric machine, Lm is the nominal value of an inductance of the asynchronous electric machine (7), and Id is a direct current and Iq is a quadrature current based on the first phase current (i1) and the second phase current (i2), and K1 is an optional adjustment factor, **characterized in that** the controller comprises a phase locked loop for estimating a stator frequency (Fs) based on the first and/or the second phase current (i1, i2), wherein the first phase current (i1) and the second phase current (i2) is transformed to a direct current (Id) and a quadrature current (Iq) of a rotating coordinate system rotating with the electrical slip pulsation of the machine based on the first phase current, the second phase current and the rotor speed ($\omega_m$), wherein the electrical rotational angle is determined using the equation $\theta = np\int(\omega_s - \omega_r)$, with $\theta$ being the electrical rotational angle of the slip pulsation, $\omega r$ the rotor pulsation and $\omega_s$ the stator pulsation, wherein the rotor angular speed ($\omega_m$) of the electric machine (7) is multiplied by the number of pole pairs (np) to provide the rotor pulsation ($\omega_r$), wherein the stator frequency (Fs) determined by the phased lock loop is converted to the stator pulsation ($\omega_s$).

7. Torque controller (16) according to claim 6, wherein the controller is further adapted to transform the first phase current (i1) and the second phase current (i2) to a direct current (Id) and a quadrature current (Iq) of a rotating coordinate system rotating with the electrical slip pulsation ($\omega_s - \omega_r$) of the electrical machine based on the first phase current and the second phase current and the rotor speed.

8. Torque controller according to any one of the claims 6 or 7, wherein the controller is further adapted to:

   determine the sign of the torque of the asynchronous electric machine based on the sign of the electrical slip pulsation ( $\omega_s - \omega_r$) of the asynchronous electric machine (7);

calculate the estimated torque of the asynchronous electric machine further based on the determined sign of the torque.

9. Torque controller according to any one of the claims 6 to 8, wherein Lm is a constant value correspondent to the value of the inductance at the nominal flux of the asynchronous electric machine.

10. Electric vehicle, in particular railway vehicle comprising:

at least one asynchronous electric machine, and
a torque controller according to one of the claims 6 to 9.


**Patentansprüche**

1. Verfahren zum Schätzen eines Drehmoments einer elektrischen Asynchronmaschine (7) eines elektrischen Fahrzeugs, insbesondere eines Schienenfahrzeugs (1), umfassend:

Empfangen mindestens eines Messwerts eines ersten Phasenstroms (i1) und eines zweiten Phasenstroms (i2) der elektrischen Asynchronmaschine (7);
Empfangen einer Rotordrehzahl ($\omega_m$) der elektrischen Asynchronmaschine (7); Berechnen eines geschätzten Drehmoments basierend auf der Rotordrehzahl der elektrischen Maschine und dem ersten und zweiten Phasenstrom, das geschätzte Drehmoment basierend auf der folgenden Gleichung berechnet wird: $T_{est}$ = K1 * np * Lm * Id * Iq, wobei np die Anzahl von Polpaaren der elektrischen Asynchronmaschine ist, Lm der Nennwert einer Induktivität der elektrischen Asynchronmaschine (7) ist, und Id ein Gleichstrom und Iq ein Quadraturstrom basierend auf dem ersten Phasenstrom (i1) und dem zweiten Phasenstrom (i2) ist, und K1 ein optionaler Einstellungsfaktor ist, **dadurch gekennzeichnet, dass** es ferner Folgendes umfasst: Schätzen einer Statorfrequenz (Fs) des Stators der elektrischen Maschine (7) unter Verwendung eines Phasenregelkreises basierend auf dem ersten und/oder dem zweiten Phasenstrom (i1, i2), wobei der erste Phasenstrom (i1) und der zweite Phasenstrom (i2) in einen Gleichstrom (Id) und einen Quadraturstrom (Iq) eines drehenden Koordinatensystems, das mit der elektrischen Schlupfpulsation der Maschine dreht, basierend auf dem ersten Phasenstroms, des zweiten Phasenstroms und der Rotordrehzahl ($\omega_m$) transformiert werden, wobei der elektrische Drehwinkel unter Verwendung der Gleichung $\theta = np\int(\omega_s - \omega_r)$ bestimmt wird, wobei $\theta$ der elektrische Drehwinkel der Schlupfpulsation ist, $\omega_r$ die Rotorpulsation und $\omega_s$ die Statorpulsation ist, wobei die Rotorwinkelgeschwindigkeit ($\omega_r$) der elektrischen Maschine (7) mit der Anzahl von Polpaaren (np) multipliziert wird, um die Rotorpulsation ($\omega_r$) bereitzustellen, wobei die durch den Phasenregelkreis bestimmte Statorfrequenz (Fs) in die Statorpulsation ($\omega_s$) umgewandelt wird.

2. Verfahren nach einem der vorherigen Ansprüche, wobei Lm ein konstanter Wert ist, der dem Wert der Induktivität bei dem Nennfluss der elektrischen Asynchronmaschine (7) entspricht.

3. Verfahren nach einem der vorherigen Ansprüche, wobei Lm gemäß der Sättigungskurve der elektrischen Asynchronmaschine (7) variabel ist.

4. Verfahren nach einem der vorherigen Ansprüche, das Verfahren ferner umfassend:

Bestimmen des Vorzeichens des Drehmoments der elektrischen Asynchronmaschine (7) basierend auf dem Vorzeichen der elektrischen Schlupfpulsation ($\omega_s - \omega_r$);
Berechnen des Absolutwerts des geschätzten Drehmoments der elektrischen Asynchronmaschine.

5. Verfahren zum Steuern eines elektrischen Fahrzeugs, insbesondere eines Schienenfahrzeugs (1), umfassend:

Empfangen eines Drehmomentbefehls;
Schätzen des Drehmoments gemäß dem Verfahren nach einem der vorherigen Ansprüche zum Bestimmen eines geschätzten Drehmoments;
Vergleichen (108) des Vorzeichens des geschätzten Drehmoments ($T_{est}$) mit dem Vorzeichen des Drehmoment-Sollwerts ($T_{ref}$) und Aktivieren von Reibungsbremsen, wenn die Vorzeichen beim Bremsen mehr als 1 Sekunde lang verschieden sind, und/oder
Aktivieren von Reibungsbremsen (110) des elektrischen Fahrzeugs (1), wenn die Differenz zwischen dem absoluten Wert des Drehmomentbefehls und dem absoluten Wert des geschätzten Drehmoments größer ist als ein vordefinierter Prozentsatz, zum Beispiel größer als 30 Prozent.

6. Drehmomentsteuerung (16) für ein elektrisches Fahrzeug (1), insbesondere ein Schienenfahrzeug, wobei das elektrische Fahrzeug mindestens eine elektrische Asynchronmaschine (7) umfasst, wobei die Steuerung angepasst ist, um mindestens einen Messwert eines ersten Phasenstroms (i1) und eines zweiten Phasenstroms (i2) der mindestens einen elektrischen Asynchronmaschine (7) zu empfangen und eine Rotordrehzahl der mindestens einen elektrischen Asynchronmaschine zu empfangen, die Steuerung (16) ferner umfassend einen I-$\Omega$ -Schätzer (28, 30, 32) zum Berechnen eines geschätzten Drehmoments basierend auf der elektrischen Schlupfpulsation ($\omega_s$- $\omega_r$) der elektrischen Asynchronmaschine (7) und des ersten und des zweiten Phasenstroms (i1, i2), die Steuerung ferner angepasst ist, um das geschätzte Drehmoment basierend auf der folgenden Gleichung zu berechnen: $T_{est}$ = K1 * np * Lm * Id * Iq, wobei np die Anzahl von Polpaaren der elektrischen Asynchronmaschine ist, Lm der Nennwert einer Induktivität der elektrischen Asynchronmaschine (7) ist, und Id ein Gleichstrom und Iq ein Quadraturstrom basierend auf dem ersten Phasenstrom (i1) und dem zweiten Phasenstrom (i2) ist, und K1 ein optionaler Einstellungsfaktor ist,
   **dadurch gekennzeichnet, dass** die
   Steuerung einen Phasenregelkreis zum Schätzen einer Statorfrequenz (Fs) basierend auf dem ersten und/oder dem zweiten Phasenstrom (i1, i2) umfasst, wobei der erste Phasenstrom (i1) und der zweite Phasenstrom (i2) in einen Gleichstrom (Id) und einen Quadraturstrom (Iq) eines drehenden Koordinatensystems, das mit der elektrischen Schlupfpulsation der Maschine dreht, basierend auf dem ersten Phasenstroms, des zweiten Phasenstroms und der Rotordrehzahl ($\omega_m$) transformiert werden, wobei der elektrische Drehwinkel unter Verwendung der Gleichung $\theta$ = np$\int$($\omega_s$ - $\omega_r$) bestimmt wird, wobei $\theta$ der elektrische Drehwinkel der Schlupfpulsation ist, $\omega$r die Rotorpulsation und $\omega_s$ die Statorpulsation ist, wobei die Rotorwinkelgeschwindigkeit ($\omega_m$) der elektrischen Maschine (7) mit der Anzahl von Polpaaren (np) multipliziert wird, um die Rotorpulsation ($\omega_r$) bereitzustellen, wobei die durch den Phasenregelkreis bestimmte Statorfrequenz (Fs) in die Statorpulsation ($\omega_s$) umgewandelt wird.

7. Drehmomentsteuerung (16) nach Anspruch 6, wobei die Steuerung ferner angepasst ist, um den ersten Phasenstrom (i1) und den zweiten Phasenstrom (i2) basierend auf dem ersten Phasenstrom und dem zweiten Phasenstrom und der Rotordrehzahl in einen Gleichstrom (Id) und einen Quadraturstrom (Iq) eines drehenden Koordinatensystems umzuwandeln, das sich mit der elektrischen Schlupfpulsation ($\omega_s$ - $\omega_r$) der elektrischen Maschine dreht.

8. Drehmomentsteuerung nach einem der Ansprüche 6 bis 7, wobei die Steuerung ferner zu Folgendem angepasst ist:

   Bestimmen des Vorzeichens des Drehmoments der elektrischen Asynchronmaschine basierend auf dem Vorzeichen der elektrischen Schlupfpulsation ($\omega_s$ - $\omega_r$) der elektrischen Asynchronmaschine (7);
   Berechnen des geschätzten Drehmoments der elektrischen Asynchronmaschine ferner basierend auf dem bestimmten Vorzeichen des Drehmoments.

9. Drehmomentsteuerung nach einem der Ansprüche 6 bis 8, wobei Lm ein konstanter Wert ist, der dem Wert der Induktivität bei Nennfluss der elektrischen Asynchronmaschine entspricht.

10. Elektrofahrzeug, insbesondere Schienenfahrzeug, umfassend:

   mindestens eine asynchrone elektrische Maschine, und
   eine Drehmomentsteuerung nach einem der Ansprüche 6 bis 9.

## Revendications

1. Procédé d'estimation d'un couple d'une machine électrique asynchrone (7) d'un véhicule électrique, en particulier d'un véhicule ferroviaire (1), comprenant :

   la réception d'au moins une mesure d'un premier courant de phase (i1) et d'un second courant de phase (i2) de la machine électrique asynchrone (7) ;
   la réception d'une vitesse de rotation du rotor ($\omega_m$) de la machine électrique asynchrone (7) ; le calcul d'un couple estimé sur la base de la vitesse de rotation du rotor de la machine électrique et des premier et second courants de phase, le couple estimé étant calculé sur la base de l'équation suivante : $T_{est}$ = K1 * np * Lm * Id * Iq, dans laquelle np est le nombre de paires de pôles de la machine électrique asynchrone, Lm est la valeur nominale d'une inductance de la machine électrique asynchrone (7), et Id est un courant continu et Iq est un courant en quadrature basé sur le premier courant de phase (i1) et le second courant de phase (i2), et K1 est un facteur de réglage facultatif, **caractérisé en ce qu'**il comprend en outre : l'estimation d'une fréquence de stator (Fs) du stator de la machine électrique (7) au moyen d'une boucle à verrouillage de phase basée sur le premier et/ou le second courant de phase (i1, i2), dans lequel le premier courant de phase (i1) et le second courant de phase (i2) sont transformés en un courant continu (Id) et un courant en quadrature (Iq) d'un système de coordonnées rotatif tournant avec la pulsation de glissement électrique de la machine sur la base du premier courant de phase, du second courant de phase et de la vitesse du rotor ($\omega_m$), dans lequel l'angle de rotation électrique est déterminé à l'aide de $\theta = np\int(\omega_s - \omega_r)$ l'équation , $\theta$ étant l'angle de rotation électrique de la pulsation de glissement, $\omega r$ la pulsation du rotor et $\omega_s$ la pulsation de stator, dans lequel la vitesse angulaire du rotor ($\omega_m$) de la machine électrique (7) est multipliée par le nombre de paires de pôles (np) pour fournir la pulsation du rotor ($\omega_r$), dans lequel la fréquence du stator (Fs) déterminée par la boucle à verrouillage de phase est convertie en pulsation du stator ($\omega_s$).

2. Procédé selon l'une des revendications précédentes, dans lequel Lm est une valeur constante correspondant à la valeur de l'inductance au niveau du flux nominal de la machine électrique asynchrone (7).

3. Procédé selon l'une des revendications précédentes, dans lequel Lm est variable, en fonction de la courbe de saturation de la machine électrique asynchrone (7).

4. Procédé selon l'une des revendications précédentes, le procédé comprenant en outre :

   la détermination du signe du couple de la machine électrique asynchrone (7) sur la base du signe de la pulsation de glissement électrique ($\omega_s - \omega_r$);
   le calcul de la valeur absolue du couple estimé de la machine électrique asynchrone.

5. Procédé de commande d'un véhicule électrique, en particulier d'un véhicule ferroviaire (1), comprenant :

   la réception d'une commande de couple ;
   l'estimation du couple conformément au procédé selon l'une des revendications précédentes pour déterminer un couple estimé ;
   la comparaison (108) du signe du couple estimé ($T_{est}$) avec le signe de la commande de couple ($T_{ref}$) et l'activation des freins à frottement si, au freinage, les signes sont différents pendant plus d'une seconde, et/ou l'activation des freins à frottement (110) du véhicule électrique (1) si la différence entre la valeur absolue de la commande de couple et la valeur absolue du couple estimé est supérieure à un pourcentage prédéfini, par exemple supérieure à 30 pour cent.

6. Unité de commande de couple (16) destiné à un véhicule électrique (1), en particulier un véhicule ferroviaire, le véhicule électrique comprend au moins une machine électrique asynchrone (7), l'unité de commande étant conçue pour recevoir au moins une mesure d'un premier courant de phase (i1) et d'un second courant de phase (i2) de l'au moins une machine électrique asynchrone (7) et pour recevoir une vitesse de rotation du rotor de l'au moins une machine électrique asynchrone, l'unité de commande (16) comprenant en outre un estimateur I-$\Omega$ (28, 30, 32) permettant de calculer un couple estimé sur la base de la pulsation de glissement électrique ($\omega_{s-} \omega_r$) de la machine électrique asynchrone (7) et des premier et second courants de phase (i1, i2), l'unité de commande étant en outre conçue pour calculer le couple estimé sur la base de l'équation suivante : $T_{est} = K1 * np * Lm * Id * Iq$, dans laquelle np est le nombre de paires de pôles de la machine électrique asynchrone, Lm est la valeur nominale d'une inductance de la machine électrique asynchrone (7), et Id est un courant continu et Iq est un courant en quadrature basé sur le premier courant de phase (i1) et le second courant de phase (i2), et K1 est un facteur de réglage facultatif, **caractérisée en ce que** l'unité de commande comprend une boucle à verrouillage de phase permettant d'estimer une fréquence du stator (Fs) sur la base du premier et/ou du second courant de phase (i1, i2), dans laquelle le premier courant de phase (i1) et le second courant de phase (i2) sont transformés en un courant continu (Id) et un courant en quadrature (Iq) d'un système de coordonnées rotatif tournant avec la pulsation de glissement électrique de la machine sur la base du premier courant de phase, du second courant de phase et de la vitesse du rotor ($\omega_m$), dans laquelle l'angle de rotation électrique est déterminé à l'aide de l'équation $\theta = np\int(\omega_s - \omega_r)$ , $\theta$ étant l'angle de rotation électrique de la pulsation de glissement, $\omega r$ la pulsation du rotor et $\omega_s$ la pulsation du stator, dans laquelle la vitesse angulaire du rotor ($\omega_m$) de la machine électrique (7) est multipliée par le nombre de paires de pôles (np) pour fournir la pulsation du rotor ($\omega_r$), dans laquelle la fréquence du stator (Fs) déterminée par la boucle à verrouillage de phase est convertie en pulsation du stator ($\omega_s$).

**7.** Unité de commande de couple (16) selon la revendication 6, l'unité de commande étant en outre conçue pour transformer le premier courant de phase (i1) et le second courant de phase (i2) en un courant continu (Id) et un courant en quadrature (Iq) d'un système de coordonnées rotatif tournant avec la pulsation de glissement électrique ($\omega_s$ - $\omega_r$) de la machine électrique sur la base du premier courant de phase et du second courant de phase et de la vitesse du rotor.

**8.** Unité de commande de couple selon l'une quelconque des revendications 6 et 7, l'unité de commande étant en outre conçue pour :

déterminer le signe du couple de la machine électrique asynchrone sur la base du signe de la pulsation de glissement électrique ($\omega_s$ - $\omega_r$) de la machine électrique asynchrone (7) ;
calculer le couple estimé de la machine électrique asynchrone en se basant en outre sur le signe déterminé du couple.

**9.** Unité de commande de couple selon l'une quelconque des revendications 6 à 8, dans laquelle Lm est une valeur constante correspondant à la valeur de l'inductance au niveau du flux nominal de la machine électrique asynchrone.

**10.** Véhicule électrique, en particulier véhicule ferroviaire comprenant :

au moins une machine électrique asynchrone, et
une unité de commande de couple selon l'une des revendications 6 à 9.

## FIG.1

FIG.2

EP 3 208 138 B1

```
┌─────────────┐
│     100     │
│     ───     │
└──────┬──────┘
       │
       ▼
┌─────────────┐
│     102     │
│     ───     │
└──────┬──────┘
       │
       ▼
┌─────────────┐
│     104     │
│     ───     │
└──────┬──────┘
       │
       ▼
┌─────────────┐
│     106     │
│     ───     │
└──────┬──────┘
       │
       ▼
┌─────────────┐
│     108     │
│     ───     │
└──────┬──────┘
       │
       ▼
┌─────────────┐
│     110     │
│     ───     │
└─────────────┘
```

## FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1322032 A1

- WO 2013061808 A1

**Non-patent literature cited in the description**

- Loss minimizing and saturation dependent control of induction machines in vehicle applications. **WINDISCH THOMAS et al.** IECON 2015 - 41ST ANNUAL CONFERENCE OF THE IEEE INDUSTRIAL ELECTRONICS SOCIETY. IEEE, 09 November 2015, 1530-1535

- **KUTIJA MARTINA et al.** Magnetization of speed sensor-less squirrel-cage induction generator for wind power application using a phase-locked loop. *ELECTRIC POWER SYSTEMS RESEARCH,* 01 May 2015, vol. 122, 119, , 129